(19) **Europäisches Patentamt / European Patent Office / Office européen des brevets**

(11) **EP 4 457 545 B1**

(12) **FASCICULE DE BREVET EUROPEEN**

(45) Date de publication et mention
de la délivrance du brevet:
**17.09.2025 Bulletin 2025/38**

(21) Numéro de dépôt: **22830284.0**

(22) Date de dépôt: **29.12.2022**

(51) Classification Internationale des Brevets (IPC):
*G01T 1/36* *(2006.01)*

(52) Classification Coopérative des Brevets (CPC):
**G01T 1/36**

(86) Numéro de dépôt international:
**PCT/EP2022/088054**

(87) Numéro de publication internationale:
**WO 2023/126508 (06.07.2023 Gazette 2023/27)**

(54) **PROCÉDÉ DE TRAITEMENT D'UN SPECTRE D'UN RAYONNEMENT X OU GAMMA ET DISPOSITIF CORRESPONDANT**

VERFAHREN ZUR VERARBEITUNG EINES RÖNTGEN- ODER GAMMA-STRAHLENSPEKTRUMS UND ENTSPRECHENDE VORRICHTUNG

METHOD FOR PROCESSING AN X-RAY OR GAMMA RAY SPECTRUM AND CORRESPONDING APPARATUS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.12.2021 FR 2114707**

(43) Date de publication de la demande:
**06.11.2024 Bulletin 2024/45**

(73) Titulaire: **Commissariat à l'Energie Atomique et aux Energies Alternatives
75015 Paris (FR)**

(72) Inventeurs:
• **THIS, Kélian**
**21120 Is sur Tille (FR)**
• **FRIGERIO, Adrien**
**21120 Is sur Tille (FR)**
• **COLAS, Sébastien**
**21120 Is sur Tille (FR)**

(74) Mandataire: **INNOV-GROUP**
**209 Avenue Berthelot**
**69007 Lyon (FR)**

(56) Documents cités:
EP-A1- 3 859 403      CN-A- 111 308 543
US-A1- 2007 211 248

**Description**

## DOMAINE TECHNIQUE

Le domaine technique de l'invention est la spectrométrie appliquée à la détection de rayonnements ionisants. Il s'agit essentiellement de spectrométrie X ou y.

## ART ANTERIEUR

Les dispositifs de détection de rayonnement ionisants, basés sur des matériaux détecteurs gazeux, semi-conducteurs ou scintillateurs, permettent d'obtenir des impulsions électriques formées par des interactions du rayonnement dans le matériau détecteur. L'amplitude de chaque impulsion dépend de l'énergie déposée par le rayonnement au cours de chaque interaction. Ces dispositifs sont usuellement couplés à des circuits de mesure spectrométriques.Les domaines d'application sont larges, et comprennent notamment les mesures de déchets, d'équipements ou d'installations nucléaires, ou la surveillance radiologique de l'environnement.

Les systèmes de mesures spectrométriques sont à présent largement industrialisés. Des logiciels permettent le paramétrage du traitement des impulsions, ainsi que le pilotage et le dépouillement automatisé de mesures.

Cependant, certaines étapes sont difficilement automatisables et laissent encore une large place à des réglages manuels. Il s'agit par exemple de la calibration en énergie, ou de la calibration en efficacité, ou certaines interprétations de mesure. Le document US 2007 211248 A1 divulgue un système et une méthode de détection et d'identification de matériaux cibles par l'analyse de spectres complexes de matériaux chimiques, biologiques, radiologiques, nucléaires et explosifs, ou tout autre type de recherche de cibles à l'aide de spectres. Pour parvenir à une analyse rapide et très précise des données spectrales, une méthode de balayage linéaire et une méthode avancée de détection des pics pour la reconnaissance des formes sont proposées.

L'invention décrite ci-après facilite l'automatisation et la répétabilité d'étapes clefs, relatives à la calibration ou au dépouillement des mesures.

## EXPOSE DE L'INVENTION

Un premier objet de l'invention est un procédé de traitement d'un spectre d'un rayonnement X ou gamma formé par un dispositif de mesure spectrométrique, le dispositif comportant :

- un détecteur, configuré pour détecter des photons X ou gamma, et pour former, à chaque détection, une impulsion dont l'amplitude dépend d'une énergie libérée par le photon X ou gamma ayant interagi dans le détecteur ;
- un circuit de mesure spectrométrique, configuré pour former un spectre, le spectre correspondant à un nombre de photons détectés dans différents canaux, à chaque canal correspondant une amplitude ou une énergie ;

le procédé comportant les étapes suivantes :

- a) disposition du dispositif face à un objet susceptible de comporter un ou plusieurs radionucléides émettant des photons X ou gamma, incidents au détecteur, chaque radionucléide émettant des photons à au moins une énergie d'émission ;
- b) détection d'une partie des photons incidents par le détecteur et formation d'un spectre des photons détectés, le spectre comportant des pics s'étendant autour de chaque énergie d'émission de chaque radionucléide, chaque pic résultant des impulsions détectées dans un canal et correspondant à ladite énergie d'émission ;
- c) traitement du spectre, de façon à obtenir une quantité d'impulsions détectées dans chaque pic du spectre ;

le procédé étant caractérisé en ce que l'étape c) comporte les sous-étapes :

- c1) prise en compte d'une liste de radionucléides, présents ou susceptibles d'être présents dans l'objet ;
- c2) prise en compte d'un vecteur d'entrée, dont chaque terme comporte une quantité d'impulsions dans chaque pic;
- c3) prise en compte d'une matrice de dispersion spectrale, dont chaque terme est associé à un canal et à une énergie d'émission, et correspond à une probabilité qu'un photon incident, dont l'énergie est ladite énergie d'émission, soit détecté dans ledit canal ;
- c4) formation d'une matrice de passage à partir la matrice de dispersion spectrale ;
- c5) prise en compte d'un modèle direct, selon lequel le vecteur d'entrée est obtenu par un produit matriciel de la matrice de passage par un vecteur de sortie, chaque terme du vecteur de sortie correspondant :

- à une activité d'au moins un radionucléide ;
- ou à un nombre de photons détectés à une énergie correspondant à une énergie d'émission d'un radionucléide;
- ou à une efficacité de détection à une énergie d'émission d'un radionucléide;

- c6) inversion du modèle direct, de façon à estimer le vecteur de sortie.

La sous-étape c6) peut comporter une estimation du vecteur d'entrée, conjointement au vecteur de sortie.

Selon un mode de réalisation, :

- l'étape c) comporte une prise en compte d'une matrice de spectres de référence, dont chaque terme est associé à une énergie d'émission et à un radionucléide, chaque terme correspondant à un nombre de photons détectés dans un pic centré sur un canal correspondant à ladite énergie d'émission, lorsque l'activité du radionucléide est égale à une activité de référence, prédéterminée ;
- lors de l'étape c), la matrice de passage est un produit de la matrice de dispersion spectrale par la matrice de spectres de référence, ou de sa transposée, de telle sorte que chaque terme de la matrice de passage est associé à un radionucléide et à un canal, chaque terme de la matrice de passage correspondant à un nombre de photons, émis par le radionucléide, à l'activité de référence, détectés dans ledit canal (i).
- le vecteur de sortie comporte des termes respectivement représentatifs de l'activité de chaque radionucléide présent dans l'objet.

L'activité de référence peut être de 1 Bq.

Selon un mode de réalisation :

- lors de l'étape c), la matrice de passage est la matrice de dispersion spectrale ;
- le vecteur de sortie comporte des termes respectivement représentatifs d'un nombre de photons détectés dans des canaux correspondant à différentes énergies d'émission des radionucléides présents dans l'objet.

La sous-étape c6 peut comporter une estimation d'une largeur de chaque pic du vecteur d'entrée, chaque largeur estimée paramétrisant la matrice de dispersion spectrale.

La sous-étape c6 comporter une estimation d'une position, parmi les canaux, correspondant au centre chaque pic du vecteur d'entrée, chaque position estimée paramétrisant la matrice de dispersion spectrale.

Selon une possibilité, l'objet comporte des radionucléides de calibration dont les énergies d'émission sont connues, le procédé comportant :

- à partir du vecteur de sortie, sélection de canaux dans lesquels le spectre comporte un nombre de photons supérieur à un seuil ;
- confrontation des canaux sélectionnés aux énergies d'émission des radionucléides de calibration ;
- détermination d'une fonction d'énergie reliant chaque canal à une énergie en fonction de la confrontation.

Selon un mode de réalisation :

- l'objet comporte des radionucléides de calibration dont la nature et éventuellement l'activité sont connues ;
- l'étape c) comporte une prise en compte d'un vecteur d'incidence, dont chaque terme correspond à un nombre de photons incidents au détecteur à chaque énergie d'émission ;
- lors de l'étape c), la matrice de passage est un produit de chaque terme de la matrice de dispersion spectrale, associé à une énergie d'émission, par la valeur du vecteur d'incidence, à ladite énergie d'émission, de telle sorte que chaque terme de la matrice de passage est associé une énergie d'émission et à un canal, chaque terme de la matrice de passage correspondant à un nombre de photons, émis par chaque radionucléide de calibration, détectés dans le canal ;
- le vecteur de sortie comporte des termes respectivement représentatifs de l'efficacité de détection du dispositif en différentes énergies d'émission.

L'étape c) peut comporter une prise en compte d'une fonction d'énergie, la fonction d'énergie étant telle que :

- la fonction d'énergie établit une correspondance entre le rang d'un canal et une valeur d'énergie ;
- la fonction d'énergie est une fonction paramétrique paramétrée par au moins un paramètre;

3

le procédé étant tel que la sous-étape c6) comporte une estimation d'au moins un paramètre de la fonction d'énergie.

L'étape c) peut comporter une prise en compte d'une fonction de résolution, la fonction de résolution étant telle que :

- la fonction de résolution détermine une largeur de chaque pic en fonction d'un canal ou d'une énergie;
- la fonction de résolution est une fonction paramétrique paramétrée par au moins un paramètre;

le procédé étant tel que la sous-étape c6) comporte une estimation d'au moins un paramètre de la fonction de résolution.

Le procédé peut prendre en compte une fonction de forme, la fonction de forme établissant une relation analytique modélisant la forme de chaque pic du spectre détecté.

Un deuxième objet de l'invention est un dispositif destiné à acquérir un spectre de photons X ou gamma émis par un objet, l'objet étant susceptible de contenir des radionucléides, le dispositif comportant :

- un détecteur, configuré pour détecter des photons X ou gamma, et pour former, à chaque détection, une impulsion dont l'amplitude dépend d'une énergie libérée par le photon X ou gamma ayant interagi dans le détecteur ;
- un circuit de mesure spectrométrique, configuré pour former un spectre, le spectre correspondant à une distribution des amplitudes des impulsions détectées par le détecteur ;
- une unité de traitement, programmée pour mettre en œuvre l'étape c) d'un procédé selon le premier objet de l'invention.

Un troisième objet de l'invention est un support, pouvant être connecté à un ordinateur, comportant des instructions qui, lorsqu'elles sont exécutées par un ordinateur, conduisent celui-ci à mettre en œuvre l'étape c) d'un procédé selon le premier objet de l'invention à partir d'un spectre résultant d'un détecteur spectrométrique. Le support peut être intégré à un ordinateur ou relié à un ordinateur par une liaison filaire ou sans fil. L'invention sera mieux comprise à la lecture de l'exposé des exemples de réalisation présentés, dans la suite de la description, en lien avec les figures listées ci-dessous.

## FIGURES

La figure 1 représente un exemple de dispositif permettant une mise en œuvre de l'invention.
La figure 2A représente un exemple de spectre.
La figure 2B est un détail de la figure 2A.
La figure 3A est un autre exemple de spectre.
La figure 3B représente le spectre de la figure 3A après extraction de la ligne de base.
La figure 4 illustre un exemple de matrice de dispersion spectrale.
La figure 5 illustre un vecteur dont chaque terme correspond à une efficacité de détection à une énergie.
La figure 6 montre un exemple de matrice de spectres de référence.
La figure 7 schématise les étapes d'un premier mode de réalisation.
La figure 8 représente une matrice de passage utilisée dans le premier mode de réalisation.
La figure 9 schématise les étapes d'un deuxième mode de réalisation.
La figure 10 montre un exemple d'extraction de surfaces de pics en mettant en œuvre le deuxième mode de réalisation.
La figure 11 schématise les étapes d'un troisième mode de réalisation.
La figure 12 illustre une matrice de passage utilisée dans le troisième mode de réalisation.
La figure 13 montre un exemple d'extraction de pics en mettant en œuvre le troisième mode de réalisation.

## EXPOSE DE MODES DE REALISATION PARTICULIERS

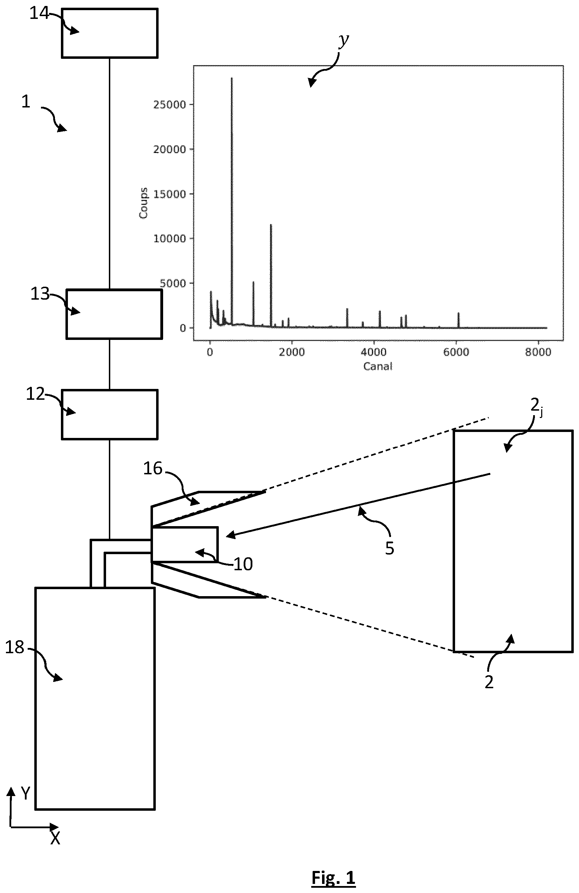

On a représenté, sur la figure 1, un dispositif 1 permettant la mise en œuvre de l'invention. Le dispositif est un système de mesure, comportant un détecteur 10, apte à interagir avec un rayonnement ionisant 5 émis par un objet 2. L'objet 2 est ici un déchet nucléaire, pouvant comporter différents radionucléides irradiants $2_j$. Généralement, les radionucléides irradiants susceptibles d'être présents dans un objet mesuré sont préalablement connus. On peut notamment constituer une liste comportant des radionucléides irradiants potentiellement présents dans l'objet analysé. L'indice j désigne chaque radionucléide irradiant.

Par rayonnement ionisant, on entend un rayonnement photonique de type X ou gamma, formé de photons dont l'énergie est par exemple comprise entre 1 keV et 2 MeV.

Dans l'exemple représenté, le détecteur comporte un matériau semi-conducteur, de type Germanium (Ge), mais il pourrait également s'agir d'un matériau semi-conducteur communément mis en œuvre pour la détection de photons ionisants, par exemple de type Si, CdTe, CdZnTe. Les photons formant le rayonnement incident forment des interactions dans le matériau détecteur. Le matériau détecteur est soumis à une tension de polarisation V. Chaque interaction génère des porteurs de charges, lesquels sont collectés par une électrode, généralement une anode.

D'autres types de détecteurs, par exemple des scintillateurs couplés à un convertisseur photons/porteurs de charge, ou un détecteur gazeux de type chambre d'ionisation, sont utilisables, dès lors qu'ils permettent la collecte d'une quantité de charges Q sous l'effet d'une énergie E libérée par le rayonnement ionisant au cours d'une interaction dans le détecteur 10. Parmi les détecteurs usuels de type scintillateur, on peut citer NaI(Tl) ou $LaBr_3$.

Le détecteur 10 est relié à un circuit électronique 12, configuré pour générer une impulsion dont l'amplitude dépend, et est de préférence proportionnelle, à la quantité de charge collectée lors d'une interaction. La quantité de charge correspond à l'énergie déposée par le rayonnement au cours de l'interaction.

Le circuit électronique 12 est relié à une unité de spectrométrie 13, disposé en aval du circuit électronique, qui permet de rassembler l'ensemble des impulsions formées durant une durée d'acquisition. Chaque impulsion correspond à une interaction du rayonnement incident dans le matériau de détection. Le circuit de spectrométrie classe alors les impulsions en fonction de leur amplitude A, pour fournir un histogramme comportant le nombre d'impulsions détectées en fonction de leur amplitude. Cet histogramme est un spectre en amplitude. Il est usuellement obtenu en utilisant un analyseur multicanaux. Chaque amplitude est discrétisée selon des canaux, à chaque canal étant assignée une bande d'amplitude. La valeur de chaque canal du spectre correspond à un nombre d'impulsions dont l'amplitude est située dans la bande d'amplitude assignée au canal. Chaque bande d'amplitude correspond à une bande d'énergie, la correspondance étant bijective. Ainsi, à chaque canal est assignée une bande d'énergie ou une bande d'amplitude.

La relation entre amplitude et énergie peut être réalisée en irradiant le détecteur à l'aide d'une source d'étalonnage, émettant un rayonnement dont on connaît l'énergie. Il s'agit en particulier d'un rayonnement présentant au moins une discontinuité, ou pic d'énergie, à une valeur connue de l'énergie. Cette opération est usuellement désignée par le terme étalonnage en énergie. Par exemple, dans le cadre de la spectrométrie gamma, on expose le détecteur à une source de calibration de type $^{152}$Eu, produisant des photons à des énergies d'émission connues. On peut également mettre en œuvre une source de type $^{137}$Cs, produisant majoritairement des photons dont l'énergie est de 661,6 keV. On peut également utiliser une source de $^{60}$Co produisant des photons dont l'énergie est majoritairement 1173 keV et 1332 keV. La calibration en énergie permet d'établir une fonction d'énergie $f_e$, permettant d'établir une relation analytique entre l'amplitude et l'énergie. La prise en compte de la fonction d'énergie $f_e$ permet, par un changement de variable, d'obtenir un spectre en énergie $y$ à partir d'un spectre d'amplitude $y_A$.

Le spectre $y$ correspond à un histogramme des amplitudes de chaque impulsion détectée, discrétisée selon des canaux d'énergie ou d'amplitude. A chaque canal est assignée une bande d'énergie, par exemple [401, 402] keV. Le spectre $y$ peut être exprimé sous la forme d'un vecteur $(y_1, ... y_i ... , y_n)$, où $n$ correspond au nombre total de canaux. A chaque canal est assigné un rang $i$, avec $1 \leq i \leq n$.

Chaque canal de rang $i$ est délimité par une amplitude inférieure $A_i$ et une amplitude supérieure $A_{i+1}$, de telle sorte qu'une impulsion détectée est affectée au canal de rang $i$ lorsque son amplitude est comprise entre $A_i$ et $A_{i+1}$.

L'amplitude inférieure $A_i$ de chaque canal correspond à une énergie inférieure $e_i$. L'amplitude supérieure $A_{i+1}$ de chaque canal correspond à une énergie supérieure $e_{i+1}$. La correspondance amplitude-énergie est établie par la fonction d'énergie $f_e$. Ainsi,

$$e_i = f_e\left(\frac{i-1}{n}, \boldsymbol{\beta}\right) \quad (1)$$

et

$$e_{i+1} = f_e\left(\frac{i}{n}, \boldsymbol{\beta}\right) \quad (2)$$

$\beta$ est un ensemble de paramètres de la fonction d'énergie $f_e$, décrit par la suite.

La grandeur $\frac{i-1}{n}$ correspond à une position relative du canal relativement au nombre maximal de canaux du spectre. Il s'agit d'un rang normalisé de chaque canal, compris entre 0 ($i = 1$) et 1 ($i = n + 1$). La normalisation permet d'établir une fonction d'énergie $f_e$ indépendante du nombre de canaux $n$, ce dernier étant paramétrable.

La fonction d'énergie peut être polynomiale. Il peut par exemple s'agir d'une fonction linéaire, auquel cas $\beta = (\beta_0, \beta_1, )$ et

$$e_i = \beta_0 + \beta_1 \frac{i-1}{n} \quad (3)\,.$$

Il peut s'agir d'une fonction polynômiale de degré 2, auquel cas

$$e_i = \beta_0 + \beta_1 \frac{i-1}{n} + \beta_2 \left(\frac{i-1}{n}\right)^2 \quad (4)$$

Le vecteur $\beta$ est soit supposé connu, suite à une opération de calibration en énergie du détecteur, soit estimé à partir d'un spectre du rayonnement émis par un objet de calibration dont la composition est connue. De façon optionnelle, le dispositif comporte un collimateur 16, destiné à restreindre le champ d'observation du détecteur. Le collimateur comporte généralement un matériau atténuant les photons gamma, par exemple du plomb ou un alliage comportant du tungstène.

Dans l'exemple représenté, le détecteur 10 est relié à un cryostat 18, comportant de l'azote liquide pour maintenir le détecteur Ge à une température de fonctionnement.

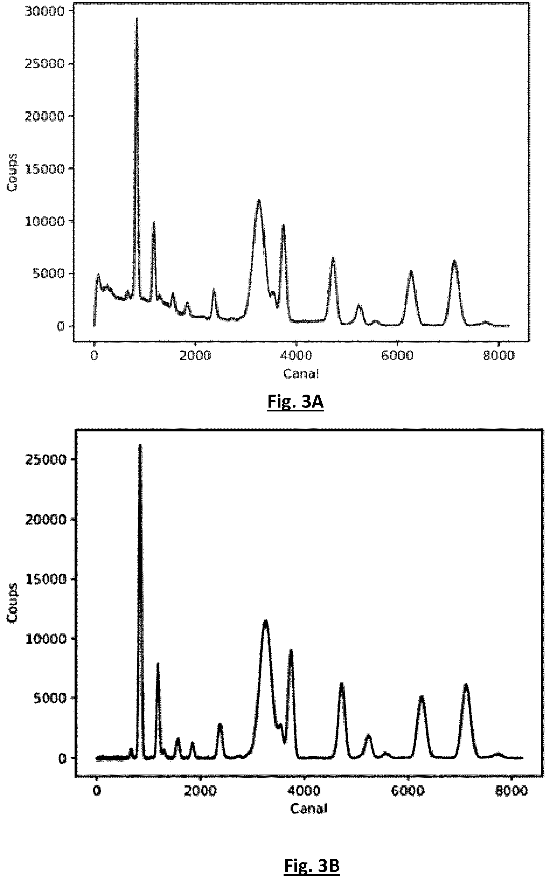

Le dispositif comporte une unité de traitement 14, programmée pour mettre en œuvre des étapes d'algorithmes décrits en lien avec les figures 3A à 3C. L'unité de traitement 14 est reliée à l'unité de spectrométrie 13, dont elle reçoit chaque spectre mesuré.

On va à présent décrire différentes grandeurs utilisées dans des opérations de traitement mises en œuvre par l'unité de traitement 14, et décrites par la suite.

<u>Composante utile du spectre</u>

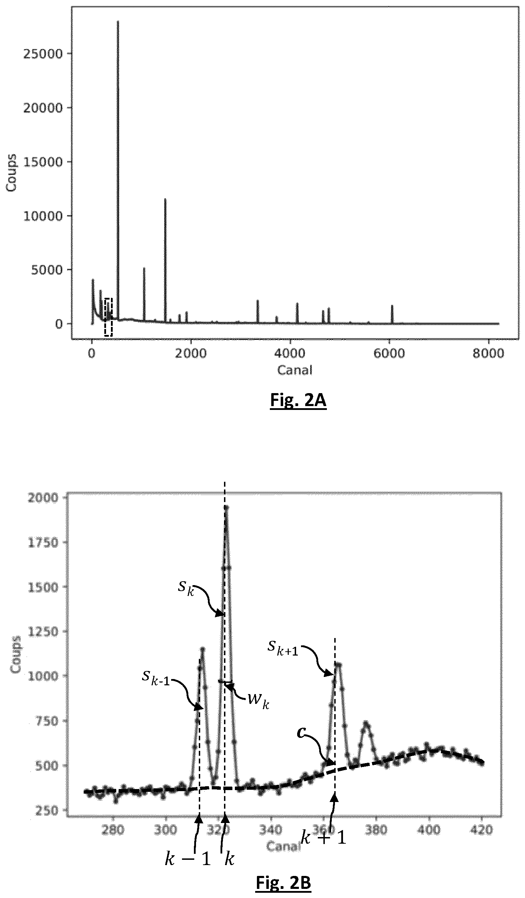

L'objectif d'une mesure par spectrométrie gamma est d'identifier les radionucléides $2_j$ présents dans l'objet 2 et, de préférence, d'estimer leurs activités respectives. La figure 2A représente un spectre $y$ résultant d'un détecteur Germanium, exposé à une source comportant le radionucléide $^{152}$Eu. L'axe des abscisses correspond aux canaux et l'axe des ordonnées correspond au nombre d'impulsions dont l'amplitude correspond à chaque canal. La figure 2B est un détail de la figure 2A, correspondant à la zone rectangulaire dessinée sur la figure 2A. Le spectre $y$ représenté comporte plusieurs pics, chaque pic correspondant à une énergie d'émission $E_k$ d'un radionucléide présent dans l'objet 2. Ces pics forment l'information utile de chaque spectre, à partir de laquelle on peut identifier les radionucléides et quantifier leurs activités respectives. Le spectre comporte également un continuum $c$, correspondant à des diffusions de photons dans le détecteur ou avant d'atteindre le détecteur. Le continuum correspond à la partie du spectre sous et entre chaque pic. Sur la figure 2B, le continuum $c$ est représenté par une courbe en tirets. Le spectre comporte également une composante de bruit de fond $b,$ se traduisant par des fluctuations statistiques dans le spectre $y.$

Ainsi, le spectre y peut être décomposé comme suit :

$$y = m + c + b \quad (5)$$

où $y, m, c$ et $b$ sont des vecteurs de dimension $(1, n)$.

L'information relative aux pics est contenue dans le vecteur $m,$ qui forme la composante utile du spectre $y.$ Le vecteur $m$ comporte l'ensemble des pics du spectre $y$ : il s'agit d'un vecteur représentatif du mélange des pics du spectre $y.$ Les vecteurs $m$ et $y$ ont la même dimension.

On va à présent décrire différents modes de réalisation, comportant un traitement du spectre mesuré $y.$ Une étape commune aux différents modes de réalisation est d'extraire la composante utile $m$ du spectre $y.$

Le continuum c peut être estimé en mettant en œuvre un algorithme de suppression de la ligne de base, tel que décrit dans la publication This K. et al « Contribution to continuum estimation in gamma spectrum by observation by local minima ». On obtient ainsi :

$y - \hat{c} = m + b$ (6) où $\hat{c}$ est l'estimation du continuum.

La figure 3A représente un spectre établi avec un détecteur spectrométrique de type LaBr$_3$, de dimension 1.5 pouce par 1.5 pouce. La figure 3B représente le spectre après extraction du continuum. La figure 3B comporte la composante utile $m,$ ainsi que le bruit de fond $b.$

De façon alternative, le vecteur $m$ peut être établi en utilisant un logiciel dédié permettant une extraction individuelle de pics de spectrométrie, par suppression ou estimation de la ligne de base. Le vecteur $m$ peut résulter d'une concaténation de chaque pic individuellement extrait d'un spectre mesuré.

On considère par la suite que l'objet est potentiellement constitué de q radionucléides $2_j$, dont les activités respectives sont $a_1 \ldots a_j \ldots a_q,$ forment un vecteur d'activité $a$ de dimension $(q, 1)$.

Une liste des $q$ radionucléides potentiellement présents dans l'objet est préalablement effectuée. Elle inclut l'ensemble des radionucléides émetteurs gamma susceptibles d'être présents dans l'objet. Les radionucléides de la liste émettent des photons à des énergies $E_1 \dots E_k \dots E_p$. Les énergies $E_1 \dots E_k \dots E_p$ correspondent à l'ensemble, sans doublons, des énergies d'émission des q radionucléides, classées par ordre croissant. Il peut également s'agir d'une partie de cet ensemble, par exemple limité à des énergies pour lesquelles les intensités d'émission sont considérées comme suffisantes. Chaque radionucléide j d'activité égale à 1Bq génère une énergie $E_k$ selon une intensité $I_{jk}$. L'intensité $I_{jk}$ est non nulle lorsque l'indice k correspond à une énergie d'émission $E_k$ du radionucléide.

Le vecteur m est formé par une contribution $\boldsymbol{u_j}$ de chaque radionucléide présent dans l'objet. $\boldsymbol{u_j}$ est un vecteur de dimension $(1, n)$, dont chaque terme $u_{ji}$ correspond à une quantité de photons émis par le radionucléide j et détecté dans le canal i, avec $1 \le j \le n$. Ainsi,

$$\boldsymbol{m} = \sum_{j=1}^{q} a_j \boldsymbol{u_j} \quad (7)$$

Matrice de dispersion spectrale

Sous l'effet d'imperfections dans le détecteur 10 ou dans le circuit 12 ou dans l'unité de spectrométrie 13, une interaction libérant une énergie d'émission $E_k$ peut être détectée non pas uniquement dans le canal de rang k correspondant à l'énergie $E_k$, mais dans d'autres canaux adjacents, par un effet de dispersion de l'énergie estimée par le dispositif. Cela se traduit par le fait qu'un pic ne correspond pas à une distribution de Dirac centrée sur le canal de rang k correspondant à l'énergie $E_k$, mais à un pic, d'une certaine surface $s_k$, de part et d'autre du canal de rang k. Sur la figure 2B, on a représenté 3 canaux de rangs k - 1, k et k + 1, qui correspondent à trois pics successifs.

La dispersion spectrale se traduit par une largeur à mi-hauteur $w_k$ des pics à chaque énergie d'émission $E_k$, avec :

$$w_k = \begin{cases} k_D f_r(E_k, \boldsymbol{\alpha}) \ si \ E_k = 511 \ keV \\ f_r(E_k, \boldsymbol{\alpha}) \ si \ E_k \neq 511 \ keV \end{cases} \quad (8)$$

- $f_r$ est une fonction de résolution, pouvant être déterminée de façon expérimentale : la fonction de résolution modélise l'évolution de la largeur à mi-hauteur $w_k$ en fonction de l'énergie. Un exemple de détermination expérimentale de la fonction de résolution est présenté par la suite, dans le deuxième mode de réalisation.
- Le vecteur $\boldsymbol{\alpha}$ est un vecteur des paramètres de la fonction de résolution $f_r$. Ce paramètre est supposé connu. Un exemple de détermination expérimentale du vecteur $\boldsymbol{\alpha}$ est présenté par la suite, dans le deuxième mode de réalisation.
- $k_D$ est un facteur d'élargissement traduisant l'effet Doppler qui élargit le pic à 511 keV. Il s'agit d'un scalaire, supérieur ou égal à 1, propre à la source, en particulier sa température. Il peut varier d'une mesure à l'autre. L'estimation de ce scalaire n'est utile que pour les spectres présentant une raie d'émission centrée sur l'énergie 511 keV.

La fonction de résolution peut prendre différentes formes paramétriques, par exemple :

$$f_r(E_k) = \sqrt{\alpha_0{}^2 + \alpha_1{}^2 E_k + \alpha_2{}^2 E_k{}^2} \quad (9)$$

où

$$\boldsymbol{\alpha} = (\alpha_0, \alpha_1, \alpha_2)$$

Outre la largeur à mi-hauteur, la dispersion spectrale peut également être modélisée par la forme des pics. La forme des pics peut être prise en compte par une fonction de forme $f_s$, qui caractérise la forme des pics. La fonction de forme est déterminée a priori, par exemple sur la base du retour d'expérience ou d'essais préalables. Dans les exemples décrits par la suite ; la fonction de forme $f_s$ est considérée comme gaussienne. Par exemple,

$$f_s(e) = \frac{2ln2}{\sqrt{\pi}} exp(-(2\ln(2)\,e^2) \quad (10)$$

Compte tenu de la largeur à mi-hauteur $w_k$ et de la fonction de forme $f_s$, on peut déterminer une probabilité $d_{ik}$ qu'un photon libérant, dans le détecteur, une énergie $E_k$, soit détecté dans un canal de rang i, avec :

$$d_{ik} = \frac{1}{N_k(e_{i+1} - e_i)} \int_{e_i}^{e_{i+1}} \frac{1}{w_k} f_s\left(\frac{e - E_k}{w_k}\right) de \quad (11)$$

où :

- $e_i$ and $e_{i+1}$ sont respectivement les énergies formant les bornes du canal de rang $i$ ;
- e est l'énergie ;
- $N_k$ est une constante de normalisation.

Si on assimile $d_{ik}$ à une probabilité, il est nécessaire que $\sum_{i=1}^{n} d_{ik} = 1$ d'où :

$$N_k = \sum_{i=1}^{n} \frac{1}{N_k(e_{i+1} - e_i)} \left[F_s\left(\frac{e - E_k}{w_k}\right)\right]_{e_i}^{e_{i+1}} \quad (12)$$

$F_S$ est une primitive de $f_S$.

La probabilité $d_{ik}$ est définie pour l'ensemble des $p$ énergies d'émission $E_k$ ($1 \le k \le p$) ainsi que l'ensemble des $n$ canaux spectraux ($1 \le i \le n$). A partir des différentes probabilités $d_{ik}$, on peut former une matrice de dispersion spectrale $D$, de dimension ($n$, $p$), dont chaque terme $D(i, k)$ est tel que $D(i, k) = d_{ik}$.

La matrice de dispersion spectrale D suppose la définition préalable de la fonction de résolution $f_r$, paramétrée par $\alpha$, de la fonction de forme $f_s$ ainsi que de la fonction d'énergie $f_e$, paramétrée par $\beta$. La matrice de dispersion spectrale correspond à une réponse spectrale du détecteur. Par réponse spectrale, on entend la fonction modélisant la forme d'un pic en fonction de l'énergie.

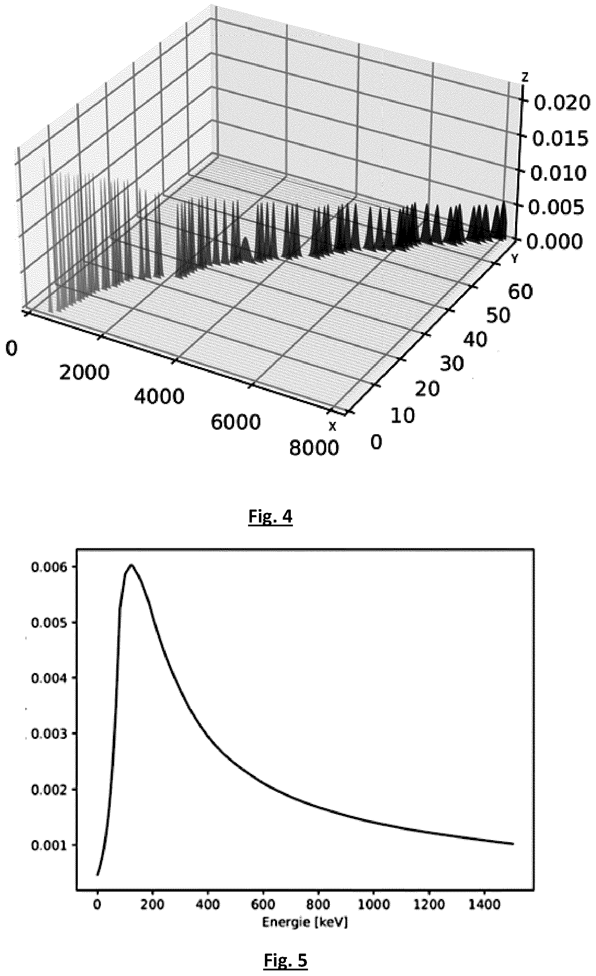

La figure 4 illustre un exemple de matrice de dispersion spectrale. L'axe X correspond à chaque canal $i$, l'axe Y correspond à chaque pic d'énergie d'émission $k$ et l'axe Z correspond à la valeur $d_{ik}$.

De façon alternative, la matrice de dispersion spectrale peut être établie sur la base d'une modélisation du détecteur, avec un éventuel recalage effectué sur la base de mesures expérimentales. Elle peut également être déterminée expérimentalement, en particulier lorsque le détecteur est destiné à être utilisé de façon répétée sur les mêmes radionucléides.

Matrice de spectres de référence

Au cours de certaines étapes décrites par la suite, on prend en compte une matrice de spectres de référence $S$, préalablement établie, de dimension ($q$, $p$), dont chaque terme $S(j, k)$ est l'aire d'un pic spectral, d'énergie $E_k$ lorsqu'un radionucléide $j$ est présent, dans la source, selon une activité prédéterminée. L'activité prédéterminée est par exemple une activité unitaire : 1 Bq pour chaque radionucléide. Ainsi, chaque terme $S(j, k)$ correspond à une quantité de photons détectés dans un pic centré sur une énergie d'émission $E_k$ pour une activité unitaire du radionucléide $2j$. La matrice de référence S est de dimension ($q$, $p$).

$$S(j, k) = s_{jk} = TI_{jk}\varepsilon_k \quad (13)$$

$T$ est la durée d'acquisition du spectre $y$ ;

$L_{jk}$ est une intensité d'émission d'un photon d'énergie $E_k$ d'une activité de 1Bq du radionucléide $j$, ce qui correspond au nombre de photons émis, à cette énergie, par seconde.

$\varepsilon_k$ est une efficacité d'observation du dispositif à l'énergie $E_k$. $\varepsilon_k$ correspond au nombre de photons détectés dans un pic centré sur l'énergie $E_k$, divisé par le nombre de photons émis par l'objet à cette énergie. L'efficacité d'observation $\varepsilon_k$ est obtenue par étalonnage, par exemple en disposant des sources étalons dont les radionucléides et l'activité est connue, dans un objet de calibration, représentatif de l'objet à mesurer. La détermination de l'efficacité d'observation peut également faire appel à des modélisations à l'aide de codes de calcul, notamment basés sur des méthodes de Monte Carlo (MCNP par exemple).

On peut former un vecteur efficacité d'observation $\varepsilon$, de dimension ($p$, 1), dont chaque terme $\varepsilon_k$ ($1 \le k \le p$) est l'efficacité d'observation à l'énergie $E_k$. L'efficacité d'observation $\varepsilon$ peut être considérée comme un produit de deux vecteurs :

$$\boldsymbol{\varepsilon} = \boldsymbol{\varepsilon_a} \odot \boldsymbol{h} \quad (14)$$

- $\odot$ est un produit de Hadamard (produit terme à terme)
- $\boldsymbol{\varepsilon_a}$ est un vecteur de dimension (p,1) dont chaque terme $\varepsilon_{a,k}$ est une efficacité d'absorption à l'énergie $E_k$. L'efficacité d'absorption traduit l'absorption du rayonnement, à chaque énergie émise, par l'objet lui-même ou tout autre écran absorbant disposé entre l'objet et le détecteur, par exemple le collimateur du détecteur. $\varepsilon_a$ peut être obtenu par modélisation à l'aide d'un code de calcul modélisant le transport de particules dans la matière (MCNP par exemple).
- $\boldsymbol{h}$ est un vecteur de dimension $(p,1)$, correspondant à la fonction de transfert du détecteur. Chaque terme $h_k$ correspond à une efficacité de détection, c'est-à-dire un ratio entre un nombre de photons émis par la source, d'énergie $E_k$ et un nombre de photons détectés par le dispositif de mesure dans le pic centré sur le canal de rang $k$. $\boldsymbol{h}$ peut être déterminé de façon expérimentale, comme décrit dans le troisième mode de réalisation. Un exemple de vecteur $\boldsymbol{h}$ est représenté sur la figure 5. Sur la figure 5, l'axe des abscisses correspond à l'énergie et l'axe des ordonnées correspond à l'efficacité de détection $h_k$.

La matrice des spectres de référence S correspond à une réponse en efficacité du détecteur. Par réponse en efficacité, on entend la fonction modélisant un ratio entre les impulsions détectées dans un pic associé à une énergie et le nombre de photons émis par la source à ladite énergie.

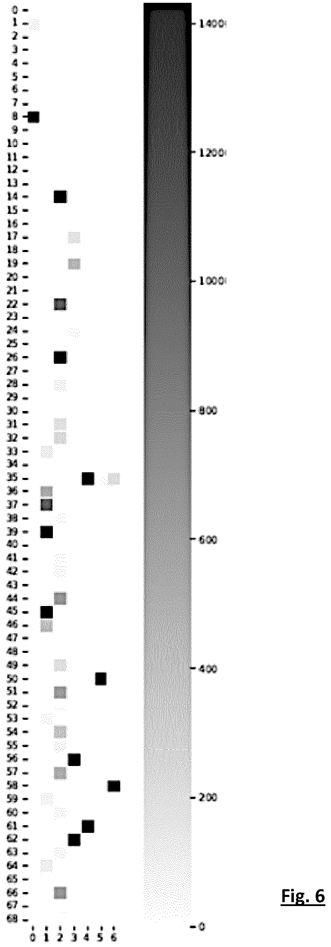

La figure 6 illustre un exemple de matrice de spectres de référence. L'axe X correspond à chaque radionucléide $j$, l'axe Y correspond à chaque pic d'énergie d'émission $k$ et l'axe Z correspond à la valeur $s_{jk}$.

<u>Premier mode de réalisation</u> : quantification d'activité.

L'objectif de ce premier mode de réalisation est d'effectuer un traitement du spectre mesuré $\boldsymbol{y}$ de façon à estimer l'activité $a_j$ de chaque radionucléide $2_j$ susceptible d'être présent dans l'objet contrôlé.

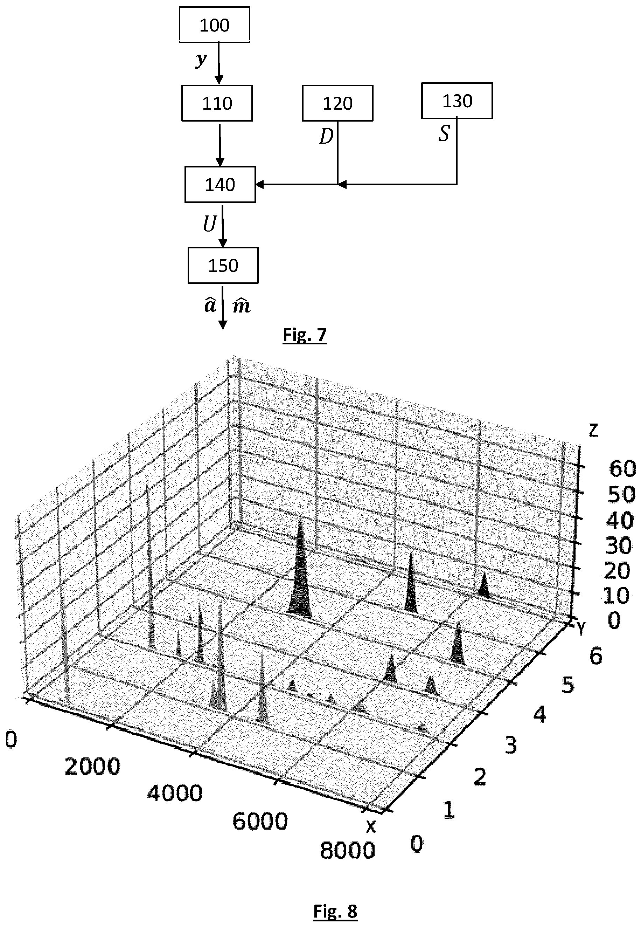

Les principales étapes de ce mode de réalisation sont schématisées sur la figure 7.

Etape 100 : mesure du spectre $\boldsymbol{y}$ à l'aide dispositif de mesure.

Etape 110 : extraction du vecteur $\boldsymbol{m + b}$

Le vecteur $\boldsymbol{m + b}$ est par exemple estimé en effectuant la soustraction :

$$\boldsymbol{y} - \boldsymbol{\hat{c}} = \boldsymbol{m} + \boldsymbol{b} \quad (6)$$

$\boldsymbol{\hat{c}}$ peut être estimé en utilisant un algorithme d'estimation de la ligne de base tel que précédemment décrit.

Etape 120 : prise en compte de la matrice de dispersion spectrale D, préalablement établie. Dans ce mode de réalisation, la matrice de dispersion spectrale est supposée connue, à l'exception du facteur $k_D$. Lorsque le spectre $\boldsymbol{y}$ comporte un pic à 511 keV, le facteur $k_D$ est estimé dans l'étape 150.

Etape 130 : prise en compte de la matrice S des spectres de référence préalablement établie.

Etape 140 : obtention d'une matrice de passage U, telle que

$$U = D^T S \quad (15)$$

$U$ est une matrice de dimension $(n, q)$, dont chaque terme $u_{ij}$ est une contribution d'un radionucléide $j$, d'activité 1Bq, dans les photons détectés dans le canal $i$.

La matrice de passage $U$ correspond à une fonction de réponse du détecteur, pour les radionucléides j considérés. Elle peut également prendre en compte la présence d'écrans entre le détecteur et les radionucléides. La fonction de réponse spectrale correspond à la matrice D et la fonction de réponse en efficacité correspond à la matrice $S$.

Le fait de prendre en compte une matrice de passage $U$, adaptée à certains radionucléides prédéterminés, permet de former une matrice dont une des dimensions est réduite. La figure 8 montre un exemple de matrice de passage $U$ de dimension (8192 x 7). Chaque ligne de la matrice représente une image des pics d'émission d'un radionucléide, dans chaque canal, pour une activité unitaire du radionucléide.

Etape 150 : Estimation de $\boldsymbol{m}$ et de l'activité de chaque radionucléide.

Au cours de cette étape, on cherche à estimer un vecteur $\boldsymbol{a}$, dont chaque terme est une activité $a_j$ du radionucléide $j$ dans l'objet mesuré. $\boldsymbol{m}$ et $\boldsymbol{a}$: sont liés par le modèle direct :

$$\boldsymbol{m} = U\boldsymbol{a} \quad (16)$$

On met en œuvre un algorithme d'optimisation permettant une minimisation d'une fonction de coût J, de façon à estimer les vecteurs $\boldsymbol{a, b}$ ainsi que, de façon optionnelle, le scalaire $k_D$.

*a* est un vecteur de dimension (q,1).

La fonction de coût *J* peut être telle que :

$$J(\boldsymbol{\theta}) = \|\boldsymbol{y} - \hat{\boldsymbol{c}} - \boldsymbol{m}(\boldsymbol{\theta})\|^2 \quad (17) \text{ avec } \boldsymbol{m} = U\boldsymbol{a}$$

où $\theta$ correspond à des variables inconnues régissant la fonction de coût : il s'agit de *a* et éventuellement de $k_D$ lorsque *m* comporte un pic centré sur 511 keV. Lorsque *m* ne comporte pas de pic sur 511 keV, $k_D$ prend une valeur arbitraire. ‖ ‖ désigne l'opérateur norme L2. La minimisation de la fonction de coût permet d'estimer les inconnues $\theta$ selon l'expression :

$$\boldsymbol{\theta} = \underset{\boldsymbol{\theta}}{\operatorname{argmin}}\big(J(\boldsymbol{\theta})\big) \quad (18)$$

Les estimations de *m* et de $\alpha$ sont conjointes du fait de la relation m = *Ua*.

Selon une autre possibilité, on suppose que $J(\theta)$ suit une loi normale par rapport à $\theta$, auquel cas la fonction de coût peut être telle que :

$$J(\boldsymbol{\theta}) = \|W[\boldsymbol{y} - \hat{\boldsymbol{c}} - \boldsymbol{m}(\boldsymbol{\theta})]\|^2 \quad (19)$$

*W* est une matrice de dimension ($n$, $n$), diagonale, dont chaque terme est l'inverse de la variance du bruit d'observation assigné à chaque canal du vecteur y. Par exemple, pour chaque canal *i*,

$$W(i,i) = \frac{1}{\sqrt{y(i)}} \quad (20)$$

Quelle que soit la fonction de coût utilisée, le fait de contraindre la minimisation $\boldsymbol{\theta} = \underset{\boldsymbol{\theta}}{\operatorname{argmin}}\big(J(\boldsymbol{\theta})\big)$ en imposant *m* = *Ua,* la matrice *U* étant prédéterminée, facilite la mise en œuvre de l'algorithme d'inversion. Aussi, la formulation d'un modèle direct, selon la forme analytique *m* = *Ua* permet l'estimation conjointe de *m*, *a* et éventuellement $k_D$.

Deuxième mode de réalisation

L'objectif du deuxième mode de réalisation est d'effectuer un traitement d'un spectre mesuré *y*, lors d'une calibration, de façon à extraire des pics et à estimer au moins un paramètre, choisi parmi la position, la surface, et la largeur à mi-hauteur, des pics présents dans le vecteur *m*. Selon ce mode de réalisation, l'objet est un objet quelconque. Contrairement au premier mode de réalisation, les fonctions d'énergie $f_e$ et de résolution $t_r$ ne sont pas supposées connues. Il en est de même de l'efficacité d'observation $\varepsilon$. Aussi, les étapes décrites ci-après sont mises en œuvre à des fins de calibration du détecteur.

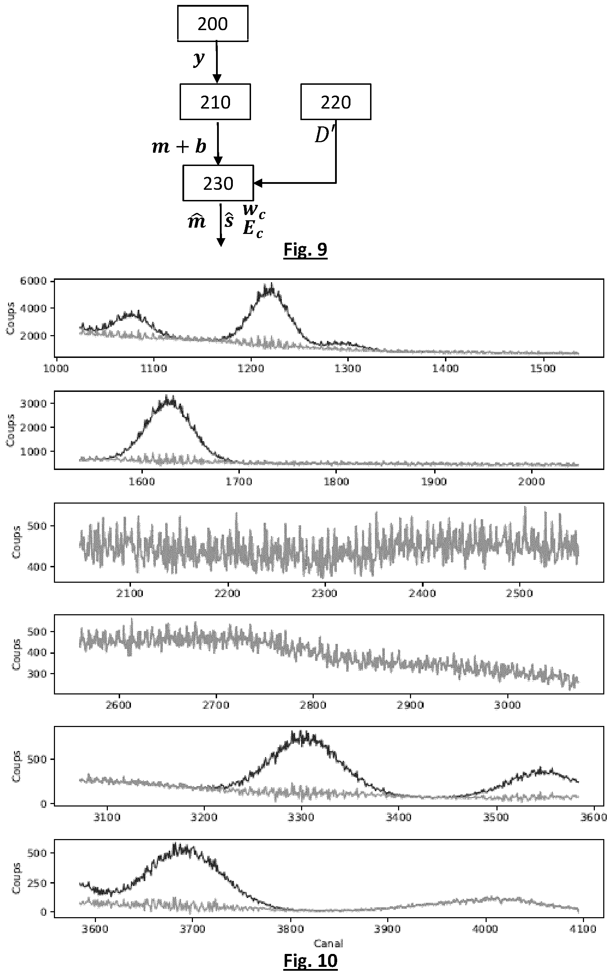

Les principales étapes de ce mode de réalisation sont schématisées sur la figure 9.

Etape 200 : mesure du spectre *y* à l'aide dispositif de mesure 1.

Etape 210 : extraction du vecteur *m + b*

Le vecteur *m + b* est par exemple estimé en effectuant la soustraction :

$$\boldsymbol{y} - \hat{\boldsymbol{c}} = \boldsymbol{m} + \boldsymbol{b} \quad (6)$$

$\hat{\boldsymbol{c}}$ peut être estimé en utilisant un algorithme d'estimation de la ligne de base tel que précédemment décrit.

Etape 220 : prise en compte d'une matrice de dispersion spectrale *D',* de dimension ($n,p$) dont chaque terme est tel que

$$d'_{ik} = \frac{1}{N_k} \int_{ei}^{ei+1} \frac{1}{w_{c,k}} f_s\left(\frac{e - E_{c,k}}{w_{c,k}}\right) de \quad (21)$$

Dans ce mode de réalisation, la matrice de dispersion spectrale *D'* forme la matrice de passage du procédé en prenant en compte une fonction d'énergie arbitraire, telle que : $e_i = i$ - 1 : un canal équivaut à 1 keV.

$w_{c,k}$ correspond à la largeur à mi-hauteur du pic de rang $k$, exprimée en canaux ; les grandeurs $w_{c,k}$ pour chaque pic forment un vecteur $\boldsymbol{w_c}$ de paramètres de la matrice $D$'.

$E_{c,k}$ est un canal du spectre correspondant à la position du centre du pic d'énergie $E_k$. $E_{c,k}$ est un nombre réel, compris entre 0 et $n + 1$. $E_{c,k}$ peut être compris entre deux rangs successifs $k$ et $k+1$. Les canaux $E_{c,k}$ correspondant à chaque pic forment un vecteur $\boldsymbol{E_c}$ de dimension $(1, p)$. $p$ désigne le nombre de pics détectés. Le vecteur $\boldsymbol{E_c}$ est un vecteur de paramètres de la matrice $D$'.

La matrice de dispersion spectrale $D$' peut être considérée comme une matrice de dispersion spectrale initiale, utilisée préalablement à la détermination de la fonction d'énergie du détecteur. La matrice de dispersion spectrale initiale $D$' est établie de façon analogue à la matrice $D$, préalablement décrite, en prenant en compte une fonction d'énergie arbitraire, simplificatrice, selon laquelle chaque canal correspond à 1 keV.

A la différence du premier mode de réalisation :

- les valeurs $w_{c,k}$ ne sont pas connues mais constituent des paramètres de la matrice de dispersion spectrale $D$';
- les canaux $E_{c,k}$ ne sont pas connus et constituent également des paramètres de la matrice de dispersion spectrale $D$'.;
- la matrice $D$' n'est pas déterminée. Sa forme paramétrique est connue, et correspond à l'expression (21).

Etape 230 : extraction des surfaces de pics.

Au cours de cette étape, on prend en compte le modèle direct :

$$\boldsymbol{m} = D'\boldsymbol{s} \quad (22)$$

où :

- $\boldsymbol{s}$ est un vecteur de dimension $(p,1)$, comporte des termes $s_k$ respectivement représentatifs du nombre de photons détectés dans un pic centré sur le canal $E_{c,k}$. Le vecteur s détermine l'aire de chaque pic du spectre, en prenant en compte la fonction de réponse spectrale du détecteur.
- $D$' est une matrice de passage du modèle direct

Le vecteur s peut être estimé en mettant en œuvre un algorithme d'optimisation, par exemple tel que décrit dans l'étape 150, ce qui conduit à l'obtention d'une estimation $\hat{\boldsymbol{s}}$ conjointement à l'estimation de $\boldsymbol{m}$.

L'algorithme d'optimisation permet une minimisation d'une fonction de coût $J$ de façon à déterminer les vecteurs $\boldsymbol{s}$ et $\boldsymbol{m}$ et les vecteurs de paramètres $\boldsymbol{w_c}$ et $\boldsymbol{E_c}$.

De même que dans le premier mode de réalisation, on met en œuvre un algorithme d'optimisation permettant une minimisation d'une fonction de coût $J$, de façon à déterminer $\boldsymbol{s}$, $\boldsymbol{w_c}$ et $\boldsymbol{E_c}$.

La fonction de coût peut être telle que :

$$J(\boldsymbol{\theta}) = \| \boldsymbol{y} - \hat{\boldsymbol{c}} - \boldsymbol{m}(\boldsymbol{\theta}) \|^2 \quad (23) \text{ avec } \boldsymbol{m} = D'\boldsymbol{s} \quad (22)$$

où $\theta$ correspond à des variables inconnues régissant la fonction de coût : il s'agit de $\boldsymbol{s}$ et $\boldsymbol{w_c}$ et $\boldsymbol{E_c}$. $\| \|$ désigne l'opérateur norme L2. La minimisation de la fonction de coût permet d'estimer les inconnues $\theta$ selon l'expression :

$$\boldsymbol{\theta} = \underset{\theta}{\operatorname{argmin}}\big(J(\boldsymbol{\theta})\big) \quad (18)$$

Quelle que soit la fonction de coût utilisée, le fait de contraindre la minimisation $\boldsymbol{\theta} = \underset{\theta}{\operatorname{argmin}}\big(J(\boldsymbol{\theta})\big)$ en imposant $\boldsymbol{m} = D'\boldsymbol{s}$, la matrice $D$' étant conditionnée, facilite la mise en œuvre de l'algorithme d'inversion.

Le vecteur $\boldsymbol{w_c}$ permet de définir la fonction de résolution $f_r$, selon l'expression (3), en utilisant la fonction d'énergie $f_e$, établissant la relation canal/énergie.

Le vecteur $\boldsymbol{E_c}$ peut être utilisé lors de l'étalonnage en énergie, en particulier pour déterminer la fonction d'énergie $f_e$ précédemment décrite, établissant une relation canal/énergie. On peut prendre en compte un seuil, au-delà duquel chaque canal, correspondant à une énergie d'émission $E_k$, est considéré comme comportant une quantité significative de photons détectés. On extrait les rangs des canaux pour lesquels la valeur $s_k$ est supérieure au seuil. Les canaux sélectionnés peuvent être confrontés aux énergies d'émission des radionucléides présents dans l'objet de calibration. On obtient ainsi différents couples canaux-énergies, que l'on peut utiliser pour déterminer la fonction d'énergie $f_e$.

Par exemple, on peut classer les rangs des canaux sélectionnés par ordre croissant, de même que les énergies d'émission, de façon à associer, à chaque canal, une énergie d'émission : le canal de rang le plus faible est associé à l'énergie d'émission la plus faible - le canal de rang le plus élevé est associé à l'énergie d'émission la plus élevée. La fonction d'énergie $f_e$ présente une forme paramétrique prédéterminée, par exemple polynômiale. Les paramètres de la fonction d'énergie (coefficients du polynôme) sont ajustés en fonction des différents couples canal-énergie.

On remarque que ce mode de réalisation permet d'effectuer un étalonnage de façon fortement automatisée, sans faire appel à une délimitation manuelle, ou assistée par ordinateur, des pics formant le spectre **y.**

La figure 10 représente une mise en œuvre d'une extraction de la surface de pics mettant en œuvre le deuxième mode de réalisation. Sur la figure 10, on a représenté, sur différents canaux d'énergie (axe des abscisses), le spectre mesuré **y** (courbe sombre) ainsi qu'une estimation de la composante **c** + **b** (courbe claire). Le vecteur **m** correspond à la différence entre les deux courbes.

Troisième mode de réalisation

L'objectif du troisième mode de réalisation est d'effectuer un traitement d'un spectre mesuré **y,** lors d'une calibration, de façon à :

- estimer la fonction de transfert **h** ou l'efficacité d'observation $\varepsilon$ précédemment décrite.
- estimer les paramètres $\beta$ de la fonction d'énergie $f_e$;
- estimer les paramètres $\alpha$ de la fonction de résolution $f_r$
- estimer le scalaire $k_D$, décrit en lien avec (8) lorsque au moins un radionucléide émet un photon à 511 keV.

Dans ce mode de réalisation, l'objet peut être un objet de calibration, comportant des sources dont les radionucléides et les activités associées sont connues. Lorsque l'efficacité d'absorption $\varepsilon_a$ est connue, le procédé permet d'estimer **h**. Dans le cas contraire, le procédé permet d'estimer $\varepsilon$.

Lorsque les activités des radionucléides est inconnue, le procédé permet d'extraire les surfaces des pics formant le vecteur **m.**

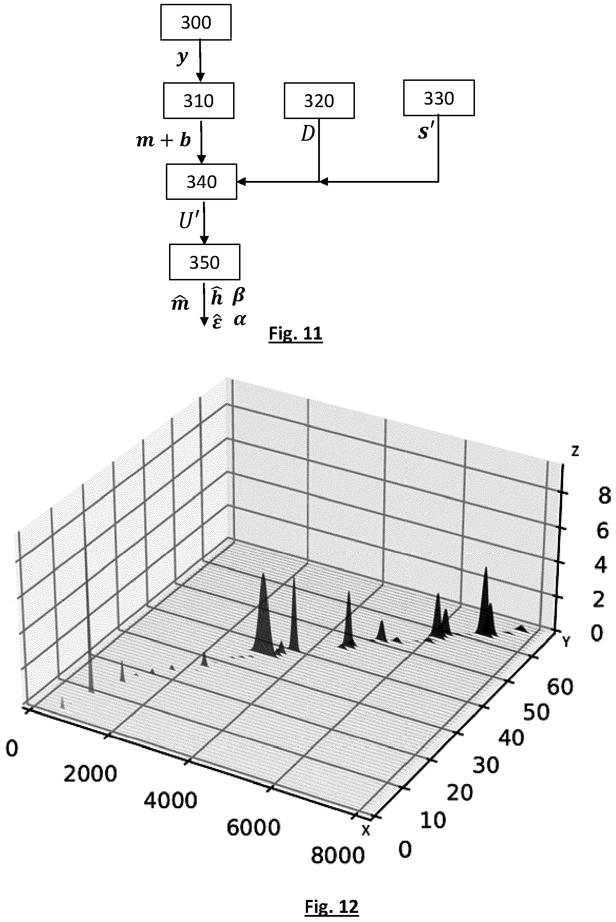

Les principales étapes de ce mode de réalisation sont schématisées sur la figure 11.

Etape 300 : mesure du spectre **y** à l'aide dispositif de mesure.

Etape 310 : extraction du vecteur **m** + **b**

Le vecteur **m** + **b** peut être estimé en effectuant la soustraction :

$$\boldsymbol{y} - \hat{\boldsymbol{c}} = \boldsymbol{m} + \boldsymbol{b} \quad (6)$$

$\hat{\boldsymbol{c}}$ peut être estimé en utilisant un algorithme d'estimation de la ligne de base tel que précédemment décrit.

Etape 320 : prise en compte de la matrice de dispersion spectrale D, préalablement définie. Chaque terme de la matrice de dispersion spectrale $D$ est tel que :

$$d_{ik} = \frac{1}{N_k(e_{i+1} - e_i)} \int_{e_i}^{e_{i+1}} \frac{1}{w_k} f_s\left(\frac{e - E_k}{w_k}\right) de \quad (11)$$

$\beta$ conditionne la détermination des valeurs $e_i$ à partir de chaque canal i. $e_i$ est défini par la fonction d'énergie $f_e$, dont la forme paramétrique est déterminée et paramétrée par $\beta$ ;

$\alpha$ conditionne les valeurs de $w_k$ : cf. (8) et (9).

La matrice de dispersion spectrale $D$ est paramétrée par : $\beta$, $\alpha$, $k_D$.

Etape 330 : prise en compte d'un vecteur **s',** dit vecteur d'incidence, en prenant en compte l'activité des différents radionucléides disposés dans l'objet de calibration, et une efficacité de détection égale à 1 pour chaque énergie. Le vecteur de référence est de dimension (1,$k$). $s'_k$ correspond à un nombre de photons détectés dans un pic centré sur l'énergie $E_k$ en prenant en compte l'activité des radionucléides de calibration, et en considérant une efficacité de détection, à chaque énergie, égale à 1. Selon une telle hypothèse, chaque photon incident est détecté. $s'_k$ correspond également au nombre de photons d'énergie $E_k$ incidents au détecteur.

Etape 340 : obtention d'une matrice de passage U' dont chaque terme :

$$U'(i,k) = u'_{i,k} = s'_k d_{i,k}(24).$$

$$s'_k = \sum_{j=1}^{q} TI_{jk}\varepsilon'_{jk} \quad (25)$$

et

$$\varepsilon'_{jk} = a_j\varepsilon_a \quad (26)$$

*U'* est une matrice de dimension (*n, p*), dont chaque terme *u'ik* est une estimation du nombre de photons détectés dans chaque canal de rang *i* en prenant en compte l'activité des radionucléides de calibration, et une efficacité de détection, à chaque énergie, égale à 1. *U'* est conditionnée par *β, α, kD*.

Lorsque l'activité des radionucléides n'est pas connue, on impose *s'k* = 1.

La figure 12 illustre un exemple de matrice *U'*. L'axe X correspond à chaque canal *i,* l'axe Y correspond à chaque pic d'énergie d'émission *k* et l'axe Z correspond à la valeur *u'ik*.

Etape 350 : Estimation de l'efficacité de détection à chaque énergie $E_k$

On peut établir le modèle direct :

$$\boldsymbol{m} = \boldsymbol{U'}\boldsymbol{h} \quad (27)$$

Le vecteur *h* est estimé en mettant en œuvre un algorithme d'optimisation, par exemple un algorithme de type maximum de vraisemblance, ce qui conduit à l'obtention d'une estimation *ĥ.* Chaque terme *ĥk* du vecteur *ĥ* correspond à une efficacité de détection à l'énergie $E_k$, comprise entre 0 et 1.

Quelle que soit la fonction de coût utilisée, le fait de contraindre la minimisation $\boldsymbol{\theta} = \underset{\boldsymbol{\theta}}{\mathbf{argmin}}\big(J(\boldsymbol{\theta})\big)$ en imposant *m = U'h*, la matrice *D* étant conditionnée, facilite la mise en œuvre de l'algorithme d'inversion. Le vecteur *ĥ* ainsi estimé peut être utilisé pour établir la matrice des spectres de référence *U* en combinant les expressions (13) et (14).

Les vecteurs *m, β, α, h* et l'éventuel scalaire $k_D$ sont déterminés en mettant en œuvre un algorithme d'optimisation, comme décrit dans les premier et deuxièmes modes de réalisation.

Lorsque l'efficacité d'absorption $\varepsilon_a$ n'est pas connue, on lui assigne une valeur unitaire à chaque énergie. L'expression (14) devient :

$$\boldsymbol{m} = \boldsymbol{U'}\boldsymbol{\varepsilon} \quad (28)$$

Le procédé permet alors de déterminer *β, α, ε* et l'éventuel scalaire $k_D$.

Le procédé permet d'effectuer simultanément un étalonnage en énergie, un étalonnage en résolution et un étalonnage en efficacité.

Selon une possibilité, le procédé peut comporter :

- une mise en œuvre du troisième mode de réalisation, pour effectuer un étalonnage en efficacité, en résolution et en énergie du détecteur ;
- une mise en œuvre du premier mode de réalisation, pour déterminer l'activité d'un objet analysé.

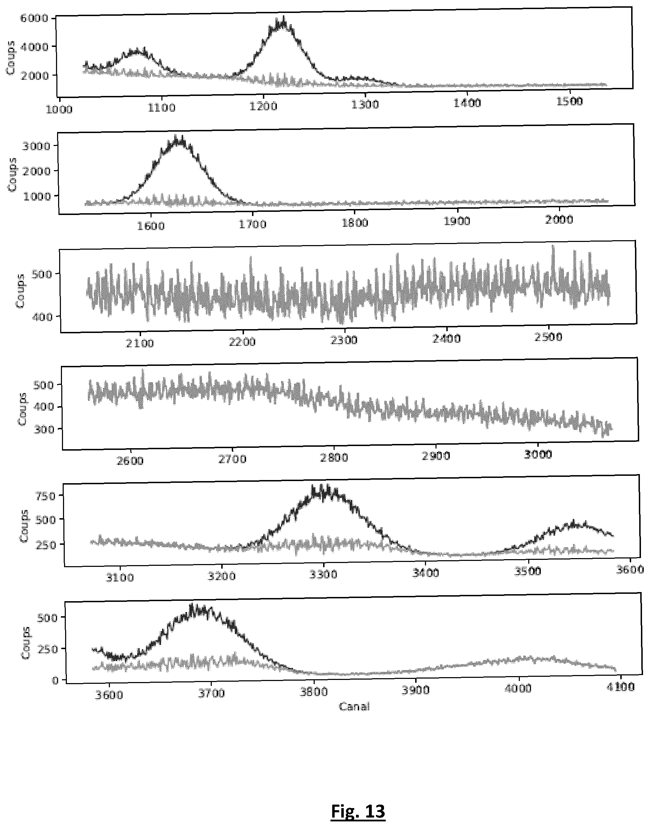

La figure 13 représente une mise en œuvre d'une extraction de la surface de pics mettant en œuvre le deuxième mode de réalisation. Sur la figure 13, on a représenté, sur différents canaux d'énergie (axe des abscisses), le spectre mesuré *y* (courbe sombre) ainsi qu'un estimation de la composante *c + b* (courbe claire). Le vecteur *m* estimé correspond à la différence entre les deux courbes.

Bien que décrite en lien avec un déchet nucléaire, l'invention peut s'appliquer au contrôle de tout autre objet : équipement ou structure d'une installation nucléaire, combustible frais ou irradié, échantillon prélevé dans l'environnement.

**Revendications**

1.   Procédé de traitement d'un spectre (*y*) d'un rayonnement X ou gamma formé par un dispositif de mesure spectrométrique (1), le dispositif comportant :

- un détecteur (10), configuré pour détecter des photons X ou gamma, et pour former, à chaque détection, une impulsion dont l'amplitude dépend d'une énergie libérée par le photon X ou gamma ayant interagi dans le détecteur ;
- un circuit de mesure spectrométrique (12), configuré pour former un spectre, le spectre correspondant à un nombre de photons détectés dans différents canaux, à chaque canal correspondant une amplitude ou une énergie ;

le procédé comportant les étapes suivantes :

- a) disposition du dispositif face à un objet (2) susceptible de comporter un ou plusieurs radionucléides ($2_j$) émettant des photons X ou gamma, incidents au détecteur, chaque radionucléide émettant des photons à au moins une énergie d'émission ($E_k$) ;
- b) détection d'une partie des photons incidents par le détecteur et formation d'un spectre (**y**) des photons détectés, le spectre comportant des pics s'étendant autour de chaque énergie d'émission ($E_k$) de chaque radionucléide, chaque pic résultant des impulsions détectées dans un canal (*i*) et correspondant à ladite énergie d'émission ;
- c) traitement du spectre (**y**), de façon à obtenir une quantité d'impulsions ($m(i)$) détectées dans chaque pic du spectre ;

l'étape c) comportant la sous-étape

- c1) prise en compte d'une liste de radionucléides, présents ou susceptibles d'être présents dans l'objet ; le procédé étant **caractérisé en ce que** l'étape c) comporte en outre les sous-étapes :

- c2) prise en compte d'un vecteur d'entrée (**m**), dont chaque terme comporte une quantité d'impulsions dans chaque pic extrait du spectre résultant de l'étape b);
- c3) prise en compte d'une matrice de dispersion spectrale (*D*), dont chaque terme ($D(i, k)$, $D'(i, k)$) est associé à un canal (*i*) et à une énergie d'émission ($E_k$), et correspond à une probabilité qu'un photon incident, dont l'énergie est ladite énergie d'émission, soit détecté dans ledit canal ;
- c4) formation d'une matrice de passage (*U*, *U'*, *D'*) à partir de la matrice de dispersion spectrale ;
- c5) prise en compte d'un modèle direct, selon lequel le vecteur d'entrée (**m**) est obtenu par un produit matriciel de la matrice de passage par un vecteur de sortie (**a, s, h,** $\varepsilon$), chaque terme du vecteur de sortie correspondant :

• à une activité ($a_j$) d'au moins un radionucléide ;
• ou à un nombre de photons ($s_k$) détectés à une énergie correspondant à une énergie d'émission d'un radionucléide;
• ou à une efficacité de détection ($h_k$, $\varepsilon_k$) à une énergie d'émission d'un radionucléide;

- c6) inversion du modèle direct, de façon à estimer le vecteur de sortie (**a, s, h,** $\varepsilon$).

2. Procédé selon la revendication 1, dans lequel la sous-étape c6) comporte une estimation du vecteur d'entrée (**m**), conjointement au vecteur de sortie (**a, s, h,** $\varepsilon$).

3. Procédé selon l'une quelconque des revendications précédentes, dans lequel :

- l'étape c) comporte une prise en compte d'une matrice de spectres de référence (*S*), dont chaque terme $S(j, k)$ est associé à une énergie d'émission ($E_k$) et à un radionucléide ($2_j$), chaque terme correspondant à un nombre de photons détectés dans un pic centré sur un canal (*k*) correspondant à ladite énergie d'émission, lorsque l'activité du radionucléide est égale à une activité de référence, prédéterminée ;
- lors de l'étape c), la matrice de passage (*U*) est un produit de la matrice de dispersion spectrale ($D(i, k)$, $D'(i, k)$) par la matrice de spectres de référence, ou de sa transposée, de telle sorte que chaque terme de la matrice de passage ($U(i,j)$) est associé à un radionucléide ($2_j$) et à un canal (*i*), chaque terme de la matrice de passage correspondant à un nombre de photons, émis par le radionucléide, à l'activité de référence, détectés dans ledit canal (*i*).
- le vecteur de sortie (*a*) comporte des termes ($a_j$) respectivement représentatifs de l'activité de chaque radionucléide présent dans l'objet.

**4.** Procédé selon la revendication 3, dans lequel l'activité de référence est de 1 Bq.

**5.** Procédé selon la revendication 1 ou la revendication 2, dans lequel :

- lors de l'étape c), la matrice de passage est la matrice de dispersion spectrale ($D'$) ;
- le vecteur de sortie ($s$) comporte des termes respectivement représentatifs d'un nombre de photons détectés dans des canaux (k) correspondant à différentes énergies d'émission des radionucléides présents dans l'objet.

**6.** Procédé selon la revendication 5, dans lequel la sous-étape c6 comporte une estimation d'une largeur ($w_c$) de chaque pic du vecteur d'entrée ($m$), chaque largeur estimée paramétrisant la matrice de dispersion spectrale ($D'$).

**7.** Procédé selon l'une quelconque des revendications 5 ou 6, dans lequel la sous-étape c6 comporte une estimation d'une position, parmi les canaux, ($E_{c,k}$) correspondant au centre chaque pic du vecteur d'entrée ($m$), chaque position estimée paramétrisant la matrice de dispersion spectrale ($D'$).

**8.** Procédé selon l'une quelconque des revendications 5 à 7, dans lequel :

- l'objet comporte des radionucléides de calibration dont les énergies d'émission sont connues ;

le procédé comportant :

- à partir du vecteur de sortie, sélection de canaux ($E_{c,k}$) dans lesquels le spectre comporte un nombre de photons supérieur à un seuil ;
- confrontation des canaux sélectionnés aux énergies d'émission ($E_k$) des radionucléides de calibration ;
- détermination d'une fonction d'énergie ($f_e$) reliant chaque canal à une énergie en fonction de la confrontation.

**9.** Procédé selon la revendication 1 ou la revendication 2, dans lequel :

- l'objet comporte des radionucléides de calibration dont la nature et éventuellement l'activité sont connues ;
- l'étape c) comporte une prise en compte d'un vecteur d'incidence ($s'$), dont chaque terme correspond à un nombre de photons incidents au détecteur à chaque énergie d'émission ;
- lors de l'étape c), la matrice de passage ($U'$) est un produit de chaque terme ($D(i, k)$) de la matrice de dispersion spectrale ($D$), associé à une énergie d'émission ($E_k$), par la valeur du vecteur d'incidence, à ladite énergie d'émission, de telle sorte que chaque terme ($U'(i, k)$) de la matrice de passage est associé une énergie d'émission et à un canal, chaque terme de la matrice de passage correspondant à un nombre de photons, émis par chaque radionucléide de calibration, détectés dans le canal ;
- le vecteur de sortie ($h, \varepsilon, s$) comporte des termes respectivement représentatifs de l'efficacité de détection ($h_k$, $c_k$, $s_k$) du dispositif en différentes énergies d'émission.

**10.** Procédé selon la revendication 9, dans lequel l'étape c) comporte une prise en compte d'une fonction d'énergie, la fonction d'énergie étant telle que :

- la fonction d'énergie ($f_e$) établit une correspondance entre le rang d'un canal et une valeur d'énergie ;
- la fonction d'énergie est une fonction paramétrique paramétrée par au moins un paramètre ($\beta$) ;

le procédé étant tel que la sous-étape c6) comporte une estimation d'au moins un paramètre de la fonction d'énergie.

**11.** Procédé selon la revendication 10, dans lequel l'étape c) comporte une prise en compte d'une fonction de résolution, la fonction de résolution ($f_r$) étant telle que :

- la fonction de résolution détermine une largeur de chaque pic en fonction d'un canal ou d'une énergie;
- la fonction de résolution est une fonction paramétrique paramétrée par au moins un paramètre ($\alpha$) ;

le procédé étant tel que la sous-étape c6) comporte une estimation d'au moins un paramètre de la fonction de résolution.

**12.** Procédé selon l'une quelconque des revendications précédentes, comportant une prise en compte d'une fonction de forme ($f_s$), la fonction de forme établissant une relation analytique modélisant la forme de chaque pic du spectre détecté.

13. Dispositif (1) destiné à acquérir un spectre de photons X ou gamma émis par un objet, l'objet étant susceptible de contenir des radionucléides, le dispositif comportant :

- un détecteur (10), configuré pour détecter des photons X ou gamma, et pour former, à chaque détection, une impulsion dont l'amplitude dépend d'une énergie libérée par le photon X ou gamma ayant interagi dans le détecteur ;
- un circuit de mesure spectrométrique (12), configuré pour former un spectre (*y*), le spectre correspondant à une distribution des amplitudes des impulsions détectées par le détecteur ; ledit dispositif étant **caractérisé en ce qu'**il comporte en outre:
- une unité de traitement (14), programmée pour mettre en œuvre l'étape c) d'un procédé selon l'une quelconque des revendications précédentes.

14. Support, pouvant être connecté à un ordinateur, comportant des instructions qui, lorsqu'elles sont exécutées par un ordinateur, conduisent celui-ci à mettre en œuvre l'étape c) d'un procédé selon l'une quelconque des revendications 1 à 12 à partir d'un spectre résultant d'un détecteur spectrométrique.

## Patentansprüche

1. Verfahren zur Verarbeitung eines Spektrums (*y*) von Röntgen- oder Gammastrahlung, das von einer spektrometrischen Messvorrichtung (1) gebildet wird, wobei die Vorrichtung Folgendes aufweist:

- einen Detektor (10), der so konfiguriert ist, dass er Röntgen- oder Gammaphotonen erfasst und bei jeder Erfassung einen Impuls erzeugt, dessen Amplitude von der Energie abhängt, die von dem im Detektor interagierenden Röntgen- oder Gammaphoton freigesetzt wird;
- eine spektrometrische Messschaltung (12), die so konfiguriert ist, dass sie ein Spektrum bildet, wobei das Spektrum einer Anzahl von Photonen entspricht, die in verschiedenen Kanälen erfasst werden, wobei jedem Kanal eine Amplitude oder eine Energie entspricht;
wobei das Verfahren die folgenden Schritte aufweist:

- a) Anordnen der Vorrichtung gegenüber einem Objekt (2), das ein oder mehrere Radionuklide ($2_j$) enthalten kann, die Röntgen- oder Gammaphotonen emittieren, die auf den Detektor treffen, wobei jedes Radionuklid Photonen mit mindestens einer Emissionsenergie ($E_k$) emittiert;
- b) Erfassen eines Teils der einfallenden Photonen durch den Detektor und Erstellen eines Spektrums (*y*) der erfassten Photonen, wobei das Spektrum Peaks aufweist, die sich um jede Emissionsenergie ($E_k$) jedes Radionuklids erstrecken, wobei jeder Peak aus den in einem Kanal (*i*) erfassten Impulsen resultiert und der Emissionsenergie entspricht;
- c) Verarbeitung des Spektrums (*y*), um eine Anzahl von Impulsen (*m(i)*) zu erhalten, die in jedem Peak des Spektrums erfasst werden;

wobei Schritt c) den folgende Teilschritt aufweist:

- c1) Berücksichtigen einer Liste von Radionukliden, die in dem Objekt vorhanden sind oder vorhanden sein können; wobei das Verfahren **dadurch gekennzeichnet ist, dass** Schritt c) außerdem die folgenden Teilschritte aufweist:
- c2) Berücksichtigen eines Eingangsvektors (*m*), bei dem jeder Term eine Impulsmenge in jedem Peak enthält, die aus dem in Schritt b) resultierenden Spektrum extrahiert wurde;
- c3) Berücksichtigen einer spektralen Streumatrix (*D*), bei der jeder Term (*D(i, k), D'(i, k)*) einem Kanal (*i*) und einer Emissionsenergie ($E_k$) zugeordnet ist und einer Wahrscheinlichkeit entspricht, dass ein einfallendes Photon, dessen Energie der Emissionsenergie entspricht, in dem Kanal erfasst wird;
- c4) Bilden einer Durchgangsmatrix (*U, U', D*) aus der spektralen Streumatrix;
- c5) Berücksichtigen eines direkten Modells, bei dem der Eingangsvektor (*m*) durch ein Matrixprodukt der Durchgangsmatrix mit einem Ausgangsvektor (*a*, s, *h*, $\varepsilon$) erhalten wird, wobei jeder Term des Ausgangsvektors Folgendem entspricht:

• einer Aktivität ($a_j$) von mindestens einem Radionuklid;

• oder eine Anzahl von Photonen ($s_k$), die bei einer Energie erfasst werden, die einer Emissionsenergie eines Radionuklids entspricht;
• oder einer Erfassungseffizienz ($h_k$, $\varepsilon_k$) bei einer Emissionsenergie eines Radionuklids;

    - c6) Umkehren des direkten Modells, um den Ausgangsvektor *(a, s, h, $\varepsilon$)* zu schätzen.

2. Verfahren nach Anspruch 1, wobei der Teilschritt c6) eine Schätzung des Eingangsvektors (*m*) zusammen mit dem Ausgangsvektor (*a, s, h, $\varepsilon$*) aufweist.

3. Verfahren nach einem der vorhergehenden Ansprüche, wobei:

    - Schritt c) die Berücksichtigung einer Referenzspektrenmatrix (S) aufweist, bei der jeder Term $S(j, k)$ einer Emissionsenergie ($E_k$) und einem Radionuklid ($2_j$) zugeordnet ist, wobei jeder Term einer Anzahl von Photonen entspricht, die in einem Peak erfasst werden, der auf einen Kanal (*k*) zentriert ist, der der Emissionsenergie entspricht, wenn die Aktivität des Radionuklids gleich einer vorbestimmten Referenzaktivität ist;
    - in Schritt c) die Durchgangsmatrix (*U*) ein Produkt aus der spektralen Streumatrix ($D(i, k)$, $D'(i, k)$) und der Referenzspektrenmatrix oder ihrer Transponierten ist, sodass jeder Term der Durchgangsmatrix ($U(i, j)$) einem Radionuklid ($2_j$) und einem Kanal (*i*) zugeordnet ist, wobei jeder Term der Durchgangsmatrix einer Anzahl von Photonen entspricht, die vom Radionuklid mit der Referenzaktivität emittiert und in dem Kanal (*i*) erfasst werden.
    - der Ausgangs-Vektor (*a*) Terme ($a_j$) enthält, die jeweils die Aktivität jedes im Objekt vorhandenen Radionuklids darstellen.

4. Verfahren nach Anspruch 3, wobei die Referenzaktivität 1 Bq beträgt.

5. Verfahren nach Anspruch 1 oder Anspruch 2, wobei:

    - in Schritt c) die Durchgangsmatrix die spektralen Streumatrix (*D'*) ist;
    - der Ausgangsvektor (*s*) Terme enthält, die jeweils eine Anzahl von Photonen darstellen, die in Kanälen (*k*) erfasst wurden, die verschiedenen Emissionsenergien der im Objekt vorhandenen Radionuklide entsprechen.

6. Verfahren nach Anspruch 5, wobei der Teilschritt c6 eine Schätzung einer Breite ($w_c$) jedes Peaks des Eingangsvektors (*m*) aufweist, wobei jede geschätzte Breite die spektrale Streumatrix (*D*) parametrisiert.

7. Verfahren nach einem der Ansprüche 5 oder 6, wobei der Teilschritt c6 eine Schätzung einer Position unter den Kanälen aufweist, wobei ($E_{c,k}$) der Mitte jedes Peaks des Eingangsvektors (*m*) entspricht, wobei jede geschätzte Position die spektrale Streumatrix (*D'*) parametrisiert.

8. Verfahren nach einem der Ansprüche 5 bis 7, wobei:

    - das Objekt Kalibrierungsradionuklide enthält, deren Emissionsenergien bekannt sind;

wobei das Verfahren Folgendes aufweist:

    - ausgehend vom Ausgangsvektor das Auswählen von Kanälen ($E_{c,k}$), in denen das Spektrum eine Photonenzahl aufweist, die über einem Schwellenwert liegt;
    - Vergleichen der ausgewählten Kanäle mit den Emissionsenergien ($E_k$) der Kalibrierungsradionuklide;
    - Bestimmen einer Energiefunktion ($f_e$), die jeden Kanal mit einer Energie in Abhängigkeit von dem Vergleich verknüpft.

9. Verfahren nach Anspruch 1 oder Anspruch 2, wobei:

    - das Objekt Kalibrierungsradionuklide enthält, deren Art und gegebenenfalls deren Aktivität bekannt sind;
    - Schritt c) die Berücksichtigung eines Einfallsvektors (*s'*) aufweist, bei dem jeder Term einer Anzahl von Photonen entspricht, die bei jeder Emissionsenergie auf den Detektor einfallen;
    - in Schritt c) die Durchgangsmatrix (*U'*) ein Produkt aus jedem Term ($D(i, k)$) der spektralen Streumatrix (*D*), der einer Emissionsenergie ($E_k$) zugeordnet ist, und dem Wert des Einfallsvektors mit der Emissionsenergie ist, so dass jeder Term ($U'(i, k)$) der Durchgangsmatrix einer Emissionsenergie und einem Kanal zugeordnet ist, wobei jeder Term der Durchgangsmatrix einer Anzahl von Photonen entspricht, die von jedem Kalibrierungsradionuklid emittiert und im Kanal erfasst werden;
- der Ausgangsvektor ($h$, $\varepsilon$, $s$) Terme enthält, die jeweils die Erfassungseffizienz ($h_k$, $\varepsilon_k$, $s_k$) der Vorrichtung bei verschiedenen Emissionsenergien darstellen.

10. Verfahren nach Anspruch 9, wobei der Schritt c) eine Berücksichtigung einer Energiefunktion aufweist, wobei die Energiefunktion wie folgt lautet:

- die Energiefunktion ($f_e$) stellt eine Entsprechung zwischen dem Rang eines Kanals und einem Energiewert her;
- die Energiefunktion ist eine parametrische Funktion, die durch mindestens einen Parameter ($\beta$) parametrisiert wird;

wobei das Verfahren so beschaffen ist, dass der Teilschritt c6) eine Schätzung mindestens eines Parameters der Energiefunktion aufweist.

11. Verfahren nach Anspruch 10, wobei der Schritt c) eine Berücksichtigung einer Auflösungsfunktion aufweist, wobei die Auflösungsfunktion ($f_r$) wie folgt lautet:

- die Auflösungsfunktion bestimmt die Breite jedes Peaks in Abhängigkeit von einem Kanal oder einer Energie;
- die Auflösungsfunktion ist eine parametrische Funktion, die durch mindestens einen Parameter ($\alpha$) parametrisiert wird;

wobei das Verfahren so beschaffen ist, dass der Teilschritt c6) eine Schätzung mindestens eines Parameters der Auflösungsfunktion aufweist.

12. Verfahren nach einem der vorhergehenden Ansprüche, das die Berücksichtigung einer Formfunktion ($f_s$) aufweist, wobei die Formfunktion eine analytische Beziehung herstellt, die die Form jedes Peaks des erfassten Spektrums modelliert.

13. Vorrichtung (1) zum Erfassen eines Spektrums von durch ein Objekt emittierten Röntgen- oder Gammastrahlen, wobei das Objekt Radionuklide enthalten kann, wobei die Vorrichtung Folgendes aufweist:

- einen Detektor (10), der so konfiguriert ist, dass er Röntgen- oder Gammaphotonen erfasst und bei jeder Erfassung einen Impuls erzeugt, dessen Amplitude von der Energie abhängt, die von dem im Detektor interagierenden Röntgen- oder Gammaphoton freigesetzt wird;
- eine spektrometrische Messschaltung (12), die so konfiguriert ist, dass sie ein Spektrum ($y$) bildet, wobei das Spektrum einer Verteilung der Amplituden der vom Detektor erfassten Impulse entspricht; wobei die Vorrichtung **dadurch gekennzeichnet ist, dass** sie darüber hinaus Folgendes aufweist:
- eine Verarbeitungseinheit (14), die dazu programmiert ist, den Schritt c) eines Verfahrens nach einem der vorhergehenden Ansprüche auszuführen.

14. Datenträger, der mit einem Computer verbunden werden kann und Anweisungen enthält, die, wenn sie von einem Computer ausgeführt werden, diesen veranlassen, Schritt c) eines Verfahrens gemäß einem der Ansprüche 1 bis 12 ausgehend von einem Spektrum, das von einem spektrometrischen Detektor erzeugt wurde, auszuführen.

**Claims**

1. A method for processing an X-ray or gamma-ray radiation spectrum ($y$) formed by a spectrometric measuring device (1), the device comprising:

- a detector (10), configured to detect X-ray or gamma-ray photons, and, upon each detection, to form a pulse the amplitude of which depends on an energy released by the X-ray or gamma-ray photon that interacted in the detector;
- a spectrometric measuring circuit (12), configured to form a spectrum, the spectrum corresponding to a number of photons detected in various channels, an amplitude or an energy corresponding to each channel;
the method comprising the following steps:

- a) arranging the device facing an object (2) likely to contain one or more radionuclides ($2_j$) emitting X-ray or gamma-ray photons that are incident on the detector, each radionuclide emitting photons at at least one emission energy ($E_k$);
- b) the detector detecting a portion of the incident photons, and forming a spectrum (**y**) of the detected photons, the spectrum containing peaks extending around each emission energy ($E_k$) of each radionuclide, each peak resulting from pulses detected in a channel (*i*) and corresponding to said emission energy;
- c) processing the spectrum (**y**) so as to obtain a quantity of pulses ($m(i)$) detected in each peak of the spectrum;

step c) comprising the following sub-step:

- c1) taking into consideration a list of radionuclides that are present or likely to be present in the object;

the method being **characterized in that** step c) further comprises the sub-steps :

- c2) taking into consideration an input vector (**m**) each term of which contains a quantity of pulses in each peak extracted from the spectrum resulting from step b);
- c3) taking into consideration a spectral dispersion matrix ( *D* ) each term ($D(i, k)$, $D'(i, k)$) of which is associated with a channel (*i*) and an emission energy ($E_k$), and corresponds to a probability of an incident photon the energy of which is said emission energy being detected in said channel;
- c4) forming a transfer matrix (*U, U', D'*) based on the spectral dispersion matrix;
- c5) taking into consideration a direct model, according to which the input vector (**m**) is obtained by a matrix product of the transfer matrix and an output vector (**a, s, h, $\varepsilon$**), each term of the output vector corresponding to:

  • an activity ($a_j$) of at least one radionuclide;
  • or a number of photons ($s_k$) detected at an energy corresponding to an emission energy of a radionuclide;
  • or a detection efficiency ($h_k$, $\varepsilon_k$) at an emission energy of a radionuclide;

- c6) inverting the direct model, so as to estimate the output vector (**a, s, h, $\varepsilon$**).

2. The method as claimed in claim 1, wherein sub-step c6) comprises estimating the input vector (**m**), together with the output vector (**a, s, h, $\varepsilon$**).

3. The method as claimed in either one of the preceding claims, wherein:

- step c) comprises taking into consideration a matrix of reference spectra (*S*) each term $S(j, k)$ of which is associated with an emission energy ($E_k$) and a radionuclide ($2_j$), each term corresponding to a number of photons detected in a peak centered on a channel (*k*) corresponding to said emission energy, when the activity of the radionuclide is equal to a predetermined reference activity;
- in step c), the transfer matrix (*U*) is a product of the spectral dispersion matrix ($D(i, k)$, $D'(i, k)$) and the matrix of reference spectra, or of its transpose, such that each term of the transfer matrix ($U(i,j)$) is associated with a radionuclide ($2_j$) and a channel (i), each term of the transfer matrix corresponding to a number of photons, emitted by the radionuclide, at the reference activity, that are detected in said channel (*i*);
- the output vector (**a**) contains terms ($a_j$) respectively representative of the activity of each radionuclide present in the object.

4. The method as claimed in claim 3, wherein the reference activity is 1 Bq.

5. The method as claimed in claim 1 or claim 2, wherein:

- in step c), the transfer matrix is the spectral dispersion matrix (*D'*) ;
- the output vector (**s**) contains terms respectively representative of a number of photons detected in channels (*k*) corresponding to various emission energies of the radionuclides present in the object.

6. The method as claimed in claim 5, wherein sub-step c6 comprises estimating a width ($w_c$) of each peak of the input vector (**m**), each estimated width parameterizing the spectral dispersion matrix (*D'*).

7. The method as claimed in either one of claims 5 and 6, wherein sub-step c6 comprises estimating a position, among the channels ($E_{c,k}$), corresponding to the center of each peak of the input vector (**m**), each estimated position parameterizing the spectral dispersion matrix (*D'*).

8.  The method as claimed in any one of claims 5 to 7, wherein:

    - the object contains calibration radionuclides the emission energies of which are known;

    the method comprising:

    - based on the output vector, selecting channels ($E_{c,k}$) in which the spectrum contains a number of photons greater than a threshold;
    - confronting the selected channels with the emission energies ($E_k$) of the calibration radionuclides;
    - determining an energy function ($f_e$) linking each channel to an energy on the basis of the confrontation.

9.  The method as claimed in claim 1 or claim 2, wherein:

    - the object contains calibration radionuclides the nature and possibly the activity of which are known;
    - step c) comprises taking into consideration an incidence vector (**s'**) each term of which corresponds to a number of photons incident on the detector at each emission energy;
    - in step c), the transfer matrix (*U'*) is a product of each term ($D(i, k)$) of the spectral dispersion matrix (*D*), associated with an emission energy ($E_k$), and the value of the incidence vector, at said emission energy, such that each term ($U'(i, k)$) of the transfer matrix is associated with an emission energy and a channel, each term of the transfer matrix corresponding to a number of photons, emitted by each calibration radionuclide, that are detected in the channel;
    - the output vector (**h, ε, s**) contains terms respectively representative of the detection efficiency ($h_k, \varepsilon_k, s_k$) of the device at various emission energies.

10. The method as claimed in claim 9, wherein step c) comprises taking into consideration an energy function, the energy function being such that:

    - the energy function ($f_e$) establishes a correspondence between the rank of a channel and an energy value;
    - the energy function is a parametric function parameterized by at least one parameter ($\beta$);

    the method being such that sub-step c6) comprises estimating at least one parameter of the energy function.

11. The method as claimed in claim 10, wherein step c) comprises taking into consideration a resolution function, the resolution function ($f_r$) being such that:

    - the resolution function determines a width of each peak as a function of a channel or energy;
    - the resolution function is a parametric function parameterized by at least one parameter ($\alpha$);

    the method being such that sub-step c6) comprises estimating at least one parameter of the resolution function.

12. The method as claimed in any one of the preceding claims, comprising taking into consideration a shape function ($f_s$), the shape function establishing an analytical relationship that models the shape of each peak of the detected spectrum.

13. A device (1) intended to acquire a spectrum of X-ray or gamma-ray photons emitted by an object, the object being likely to contain radionuclides, the device comprising:

    - a detector (10), configured to detect X-ray or gamma-ray photons, and, upon each detection, to form a pulse the amplitude of which depends on an energy released by the X-ray or gamma-ray photon that interacted in the detector;
    - a spectrometric measuring circuit (12), configured to form a spectrum (**y**), the spectrum corresponding to a distribution of the amplitudes of the pulses detected by the detector;

    the device being **characterized in that** it further comprises :

- a processing unit (14), programmed to implement step c) of a method as claimed in any one of the preceding claims.

14. A medium, able to be connected to a computer, comprising instructions, when executed by a computer, lead tor implementing step c) of a method as claimed in any one of claims 1 to 12 based on a spectrum resulting from a spectrometric detector.

**Fig. 1**

**Fig. 2A**

**Fig. 2B**

**Fig. 3A**

**Fig. 3B**

**Fig. 4**

Energie [keV]

**Fig. 5**

**EP 4 457 545 B1**

Fig. 6

Fig. 7

Fig. 8

Fig. 9

Fig. 10

Fig. 11

Fig. 12

**Fig. 13**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007211248 A1

**Littérature non-brevet citée dans la description**

- **THIS K. et al.** *Contribution to continuum estimation in gamma spectrum by observation by local minima*